# EUROPEAN PATENT SPECIFICATION

(11) **EP 3 802 370 B1**
(45) Date of publication and mention of the grant of the patent: **19.11.2025**
(21) Application number: 19815192.0
(22) Date of filing: 10.06.2019
(51) Int. Cl.: B65G 1/02, B65G 1/04

(54) **IMPROVED STORAGE UNITS AND ROBOTIC STORAGE/RETRIEVAL VEHICLES FOR A THREE-DIMENSIONAL STORAGE SYSTEM**
VERBESSERTE LAGEREINHEITEN UND ROBOTISCHE REGALBEDIENFAHRZEUGE FÜR EIN DREIDIMENSIONALES LAGERUNGSSYSTEM
UNITÉS DE STOCKAGE AMÉLIORÉES ET VÉHICULES DE STOCKAGE/RÉCUPÉRATION ROBOTISÉS DESTINÉS À UN SYSTÈME DE STOCKAGE TRIDIMENSIONNEL

(30) Priority: 08.06.2018 US 201862682691 P; 22.11.2018 US 201862770788 P; 09.01.2019 US 201962790081 P
(43) Date of publication of application: 14.04.2021
(73) Proprietor: Attabotics Inc., Calgary, Alberta T2E 8W1 (CA)
(72) Inventor: GRAVELLE, Scott, Calgary, Alberta T2E 8W1 (CA); LOMAS, Simon, Calgary, Alberta T2E 8W1 (CA); EARL, John, Calgary, Alberta T2E 8W1 (CA); DHALIWAL, Sundeep, Calgary, Alberta T2X 8W1 (CA)
(74) Representative: Nederlandsch Octrooibureau
(86) International application number: PCT/CA2019/050816
(87) International publication number: WO 2019/232652

(56) References cited:
- EP-A2- 0 262 526
- WO-A1-2016/172793
- WO-A1-2016/172793
- US-B2- 7 591 630
- US-B2- 9 122 566
- US-B2- 9 187 244

## Description

### FIELD OF THE INVENTION

The present invention relates generally to automated storage and retrieval systems useful in order fulfillment environments.

### BACKGROUND

Applicant's prior PCT application WO 2016/172793 A1 disclosed a goods-to-man storage and retrieval system employing a three-dimensional storage grid structure in which a fleet of robotic storage/retrieval vehicles navigate a three-dimensional array of storage locations in which respective bins or other storage units are held. The storage/retrieval vehicles travel horizontally in two dimensions on both a gridded upper track layout disposed above the three-dimensional array of storage locations, and a gridded lower track layout disposed at ground level below the array of storage locations. The same storage/retrieval vehicles also traverse the structure in the third vertical dimension through vertically upright shafts that join together the upper and lower track layouts. Each column of storage locations is neighboured by one of these upright shafts, whereby each and every storage location in the grid is directly accessible by the storage/retrieval vehicles, which are equipped with rotatable turrets by which each robotic storage/retrieval vehicle access any of the storage locations on all four sides of the shaft. This PCT application discloses a combination according to the preamble of claim 1.

Continued development has led to numerous improvements in the system design, including improvements to the robotic storage/retrieval vehicles and the storage units compatible therewith, as documented in detail in the following description and appended figures.

### SUMMARY OF THE INVENTION

It is the object of this invention to improve storage units and robotic storage/retrieval vehicles for a three-dimensional storage system.

This object is achieved by the subject matter of the independent claim.

Preferred embodiments of the invention are mirrored by the dependent claims.

### BRIEF DESCRIPTION OF THE DRAWINGS

Figure 1 is a perspective view of a three-dimensional grid structure from Applicant's aforementioned prior PCT application, in which a three-dimensional array of storage units are contained and through which a fleet of robotic storage/retrieval vehicles travel in three dimensions to access each of said storage units.
Figure 2 is a top-right perspective view of a robotic storage/retrieval vehicle of the present invention.
Figure 3 is a top-right perspective view of the robotic storage/retrieval vehicle of Figure 2 with a modular storage bin in a fully loaded position thereon.
Figure 4 is a top perspective view of a base module of the modular storage bin of Figure 3.
Figure 5 is a bottom perspective view of the base module of Figure 4.
Figure 6 is a bottom plan view of the base module of Figure 4.
Figure 7 is an overhead plan view of the base module of Figure 4.
Figure 8 is a cross-sectional view of the base module of Figure 7 as viewed along line A - A thereof.
Figures 9A through 9F are perspective views illustrating sequential steps of a successful loading process pulling the modular storage bin into the fully loaded position on the robotic storage/retrieval vehicle.
Figures 10A through 10F are side elevational views illustrating the sequential steps of the successful loading process during the extraction of the modular storage bin from a storage location in the three-dimensional grid structure of Figure 1.
Figures 11 and 12 are detailed closeup views of Figures 10C and 10D, respectively.
Figures 13A through 13D illustrate sequential steps in a failed loading process in which the storage bin is not properly engaged and is only partially loaded onto the robotic storage/retrieval vehicle, and Figures 13E and 13F illustrate subsequent re-positioning steps to unload the storage bin back into the storage location in preparation for a repeated loading attempt.
Figures 14A through 14D are schematic top plan views of the robotic storage/retrieval vehicle of Figure 2 with a loading/unloading mechanism thereof rotated into four different working positions, wherein broken lines illustrate a circular catch channel in the underside of a storage bin carried on the vehicle to accommodate rotation of the loading/unloading mechanism relative to the storage unit.
Figures 15A through 15F illustrate the sequential steps of an unloading process pushing the modular storage bin off the robotic storage/retrieval vehicle into a selected storage location in the three-dimensional grid structure.

### DETAILED DESCRIPTION

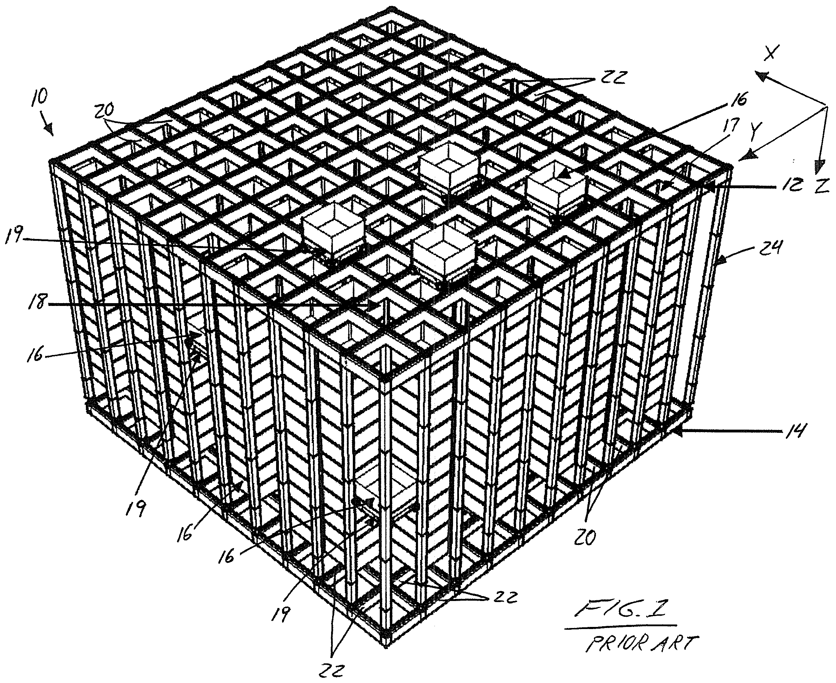

Figure 1 illustrates the three-dimensional grid structure 10 from Applicant's aforementioned prior PCT application. A gridded upper track layout 12 resides in an elevated horizontal plane well above a matching and aligned gridded lower track layout 14 situated in a lower horizontal plane closer to ground level. Between these aligned upper and lower track layouts is a three-dimensional array of storage locations, each capable of holding a respective storage unit 16 therein, in the form of open-top or openable/closeable storage tray, bin or tote capable of holding any variety of goods therein. The storage locations are arranged in vertical columns, in which storage locations of equal square footprints are aligned over one another. Each such storage column 17 is neighboured by a vertically upright shaft 18 through which its storage locations are accessible. A fleet of robotic retrieval vehicles 19 horizontally traverse each track layouts in two dimensions and also traverse vertically between the two track layouts via the open shafts 18.

Each track layout features a set of X-direction rails 20 lying in the X-direction of the respective horizontal plane, and a set of Y-direction rails perpendicularly crossing the X-direction rails in the Y-direction of the same horizontal plane. The crossing rails define a horizontal reference grid of the storage system, where each horizontal grid row is delimited between an adjacent pair of the X-direction rails, and each horizontal grid column is delimited between an adjacent pair of the Y-direction rails. Each intersection point between one of the horizontal grid columns and one of the horizontal grid rows denotes the position of a respective vertical storage column 17 or a respective upright shaft 18. In other words, each storage column 17 and each shaft 18 reside at a respective Cartesian coordinate point of the reference grid at a respective area bound between two of the X-direction rails and two of the Y-direction rails. Each such area bound between four rails in either track layout is also referred to herein as a respective "spot" of said track layout. The three-dimensional addressing of each storage location in the system is completed by the given vertical level at which the given storage location resides within the respective storage column 17. That is, a three-dimensional address of each storage location is dictated by the horizontal grid row, horizontal grid column, and vertical column level of the storage location in the three-dimensional grid.

A respective upright frame member 24 spans vertically between the upper and lower track layouts at each intersection point between the X-direction and Y-direction rails, thereby cooperating with the track rails to define a framework of the three-dimensional grid structure for containing and organizing the three-dimensional array of storage units within this framework. As a result, each upright shaft 18 of the three-dimensional storage array has four vertical frame members 24 spanning the full height of the shaft at the four corners thereof. Each frame member 24 has respective sets of rack teeth arranged in series in the vertical Z-direction of the three-dimensional grid on two sides of the frame member. Each shaft thus has eight sets of rack teeth in total, with two sets at each corner of the shaft, which cooperate with eight pinion wheels on the robotic storage/retrieval vehicles 19 to enable traversal of same between the upper and lower track layouts through the shafts 18 of the three-dimensional grid structure.

Each robotic storage/retrieval vehicle 19 has both round conveyance wheels for the conveyance of the robotic storage/retrieval vehicle over the upper and lower track layouts in a track-riding mode and toothed pinion wheels for traversal of the robotic storage/retrieval vehicle through the rack-equipped shafts in a shaft-traversing mode. Each pinion wheel and a respective conveyance wheel are part of a combined singular wheel unit, of which the entirety, or at least the conveyance wheel, is extendable in an outboard direction from the vehicle for the use of the conveyance wheels in a track-riding mode on either track layout, and retractable in an inboard direction of the vehicle for the use of the pinion wheels in a shaft-traversing mode engaging the pinion wheels with the rack teeth of the upright frame members of a shaft.

The framework of the grid structure includes a set of shelving brackets at each storage location to cooperatively form a shelf for the storage unit currently stored at said location, whereby any given storage unit 16 is removed from its storage location by one of the robotic retrieval vehicles 19 without disrupting the storage units above and below it in the same storage column. Likewise, this allows a storage unit to be returned to a prescribed location at any level in the array.

Though omitted in Figure 1 to reveal the lower gridded track layout 14 at the bottom of the three-dimensional grid, a number of working stations are typically distributed around the perimeter of the lower gridded track layout to serve as destinations to which the robotic retrieval vehicles 19 deliver the storage units 16 pulled from the storage columns. Except for differences explicitly described herein, the framework of the three-dimensional grid structure, the working stations, the robotic storage/retrieval vehicles, the travel thereof horizontally atop the upper and lower track layouts and vertically through the shafts, and their transition between the track-riding and shaft-traversing modes are the same as described in Applicant's aforementioned prior PCT application, or in Applicant's copending U.S. provisional patent applications 62/682,691, filed June 8, 2018, and 62/770,788, filed November 22, 2018.

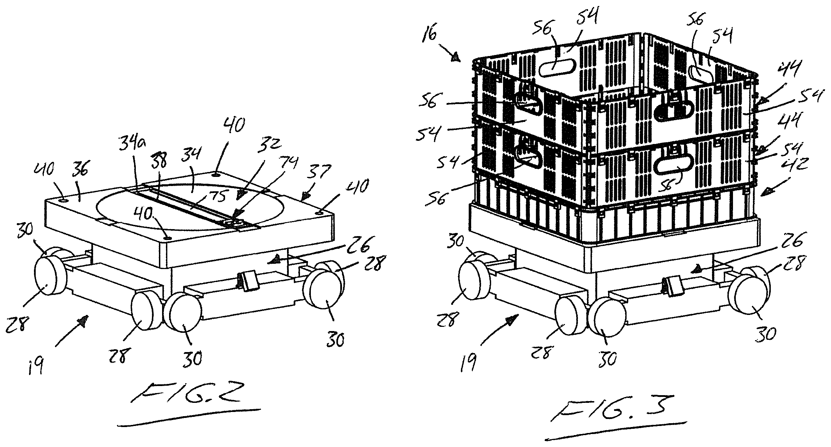

Figure 2 shows one of the robotic storage/retrieval vehicles 19 of the present invention, on which any storage unit 16 of the present invention is receivable for transport thereof within the three-dimensional grid structure to and from, and through, the working stations. In the illustrated example, the storage unit to and from which smaller individual items are inserted and removed is an open-top bin 16, though as mentioned herein above, an openable/closeable box or tote is alternatively used. In other embodiments, the storage unit is the packaging of an individual item, as opposed to a container for storing multiple items therein. In other embodiments, where the grid dimensions and working stations are of a larger scale, a storage unit is a pallet on which one or items are received, whether one relatively large individual item, or a plurality of items. In the example of multiple palleted items, the items are distributed among multiple containers (e.g., boxes, trays, bins or totes) placed or stacked on the pallet, with one or more items stored in each such container.

As disclosed in Applicant's aforementioned prior PCT application, each robotic storage/retrieval vehicle 19 features a frame or chassis 26 on which there is carried a set of four X-direction wheel units 28 arranged in pairs on two opposing sides of the robotic storage/retrieval vehicle, and a set of four Y-direction wheel units 30 arranged in pairs on the other two opposing sides of the robotic storage/retrieval vehicle. Each X-direction wheel unit 28 resides just around the corner from a respective Y-direction wheel unit 30 at a neighbouring side of the vehicle frame 16. The details of the pinion and conveyance teeth and associated drive componentry are omitted for illustrative simplicity and are identical to those disclosed in Applicant's aforementioned prior PCT application. Atop the frame 26 is disposed an upper support platform 32 on which the storage unit 16 is receivable for carrying thereof by the robotic storage/retrieval vehicle 19. The illustrated platform features a rotatable turret 34 surrounded by a stationary outer deck surface 36, the outer boundaries of which denote the square outer perimeter 37 of the platform 32.

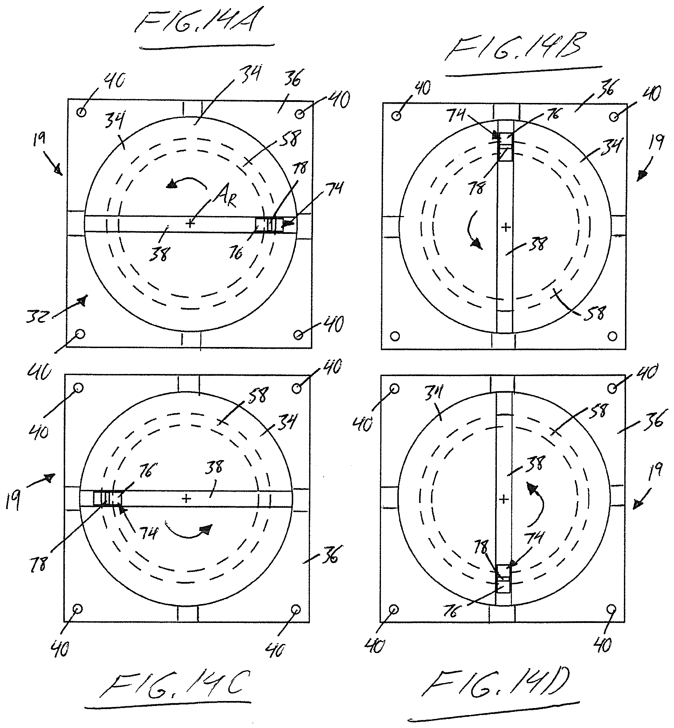

The turret has a linearly extendable/retractable arm 38 mounted in a diametric slot of the turret and movably supported therein for linear movement into and out of a deployed position extending outwardly from the outer circumference of the turret at an arm-deployment point 34a denoted by one end of the diametric slot. Figure 2 shows the arm 38 in a fully retracted position contained entirely within the diametric slot so as not to project beyond the outer circumference of the turret. The extendable/retractable function of the arm 38, together with the rotatable function of the turret, allows the pulling of storage units onto the support platform and pushing of storage units off the support platform at all four sides of the robotic storage/retrieval vehicle. That is, the turret is rotatable into four different working positions, shown in Figure 14. In each working position, the arm-deployment point 34a on the turret circumference points toward a respective perimeter side of the platform to enable a selective extension of the arm 28 outwardly from that side of the platform to interact with a storage unit situated on that side of the vehicle. Accordingly, each vehicle accesses a storage unit on any side of any shaft in the three-dimensional grid structure since the arm can be extended to any of the vehicle's four sides.

The turret 34 and surrounding deck surface 36 of the platform collectively define a square landing area atop which the storage unit is seated when carried on the upper platform robotic storage/retrieval vehicle 14. This landing area is equal or nearly equal in size and shape to the underside of each storage unit in the three-dimensional grid structure. This is demonstrated by Figure 3, where the fully and properly seated position of the storage unit is seen to occupy a full or near entirety of the landing area without overhanging the outer perimeter of the platform. Accordingly, in its properly seated position on the landing area, the entire footprint of the storage unit resides within the outer perimeter of the platform or landing area.

For the purpose of ensuring that the storage unit is fully received and properly aligned on the landing area of the robotic storage/retrieval vehicle, the upper support platform 32 has a set of load status sensors 40 situated in close proximity to the outer perimeter thereof at spaced apart positions along said perimeter. In the illustrated example, the load sensors are optical sensors recessed in the deck surface 36 of the landing area, and provided in a quantity of four, each positioned proximate a respective one of the four outer corners of the square landing area. As part of a loading routine pulling a storage unit onto the robotic storage/retrieval vehicle from a storage location in the three-dimensional grid using retraction of the extendable/retractable arm, a computer processor communicably connected to the load status sensors, a local processor onboard the vehicle, checks the status of the four load status sensors for detected presence of the underside of the storage unit above the sensor. A positive detection signal from all four load status sensors thus confirms the presence of the storage unit at all four corners of the landing area, thereby confirming that the storage unit is fully received on the landing area and is in properly squared alignment thereon.

One embodiment uses reflective optical sensors for load status detection, where light energy transmitted by an optical beam emitter of the sensor is reflected off the underside of the storage unit back to an optical receiver of the sensor when the storage unit is present thereover, thus successfully determining said presence. Time of flight calculation (i.e., the difference in time between the emission of an optical pulse and detection of the reflected optical pulse) is used to differentiate between reflection off the underside of a storage bin seated on the landing area of the robotic storage/retrieval vehicle versus reflection off another surface situated further away from the sensor. It will be appreciated that sensor types other than optical sensors are employed, including limit switches mechanically actuated by contact with the underside of the storage unit, or magnetic sensors actuated by the presence of cooperating magnetic elements emitting detectable magnetic fields at the underside of the storage unit. However, optical sensors are preferable to avoid moving parts or the need for magnetic integration or other specialized configuration of the storage units.

Referring to Figure 3, the storage unit 16 in the illustrated embodiment is a modular storage unit composed at least of a base module 42, and having one or more wall modules 44 stacked atop the base module to increase the overall height of the modular storage unit 16. The base module 42 is the part of the storage unit that is seated on the shelving brackets of the three-dimensional grid structure when disposed in a respective storage location therein, and likewise is the part of the storage unit that is seated on the platform 32 of the robotic storage/retrieval vehicle 19 when carried thereon for conveyance to or from a storage location in the grid structure.

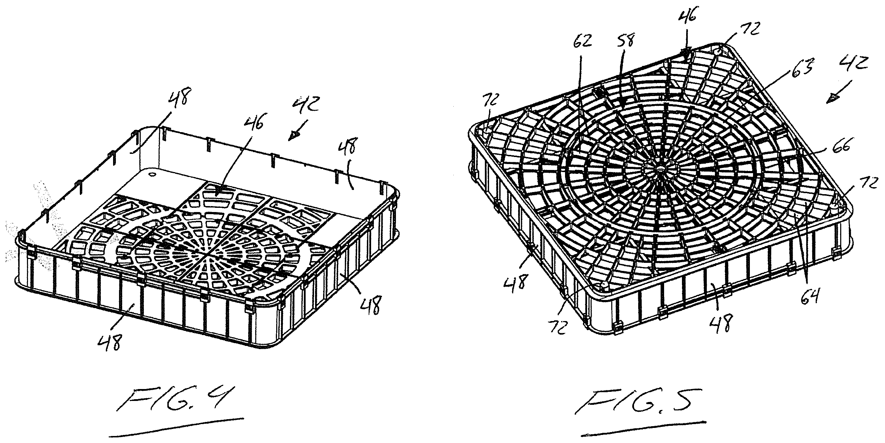

Turning to Figures 4 through 8, the base module 42 features a horizontal floor panel 46 of generally equal square shape and size to the platform landing area of the robotic storage/retrieval vehicle 19, and a set of four vertical side walls 48 standing perpendicularly upright from the square floor panel 48 at the four perimeter edges thereof. A height of each side wall 48 is notably lesser than the width of the floor panel 46, whereby the base module 42 has a tray-like shape delimiting a relatively shallow interior space between the four side walls 48 above the floor panel 46. Each wall module 44 is bottomless and topless, consisting solely of a set of four rectangular vertical side walls 54 that preferably each have a handle opening 56 therein, and that are laid out on respective sides of a square area matching that of the base module's floor panel. Accordingly, in a stacked position atop the base module, the four side walls 54 of each wall module reside in aligned relation over the side walls 48 of the base module. Accordingly, the wall modules serve as wall extensions to the base module to increase the height of the interior space of the modular storage unit, thus transforming the modular storage unit from a relatively shallow tray into a tote or bin whose deeper interior is delimited by the extended walls of the modular assembly.

The topside of the floor panel 46 of the base module defines a floor area of the interior space of the storage unit, and it is on this floor area that items are placeable within the confines of the side walls for storage of such items inside the storage unit. The underside of the floor panel 46 defines the underside of the overall storage unit, and it is here that a number of catch features are defined for cooperation with a catch member on the extendable/retractable arm of the storage/retrieval vehicle 19 to enable loading and unloading of the storage unit 16 to and from the storage/retrieval vehicle, as described in more detail below. Though the illustrated embodiment employs a modular storage unit, non-modular single-piece storage units also employ the same or similar catch features as those disclosed below to provide the same co-operable functionality with the storage/retrieval vehicles of the type described herein.

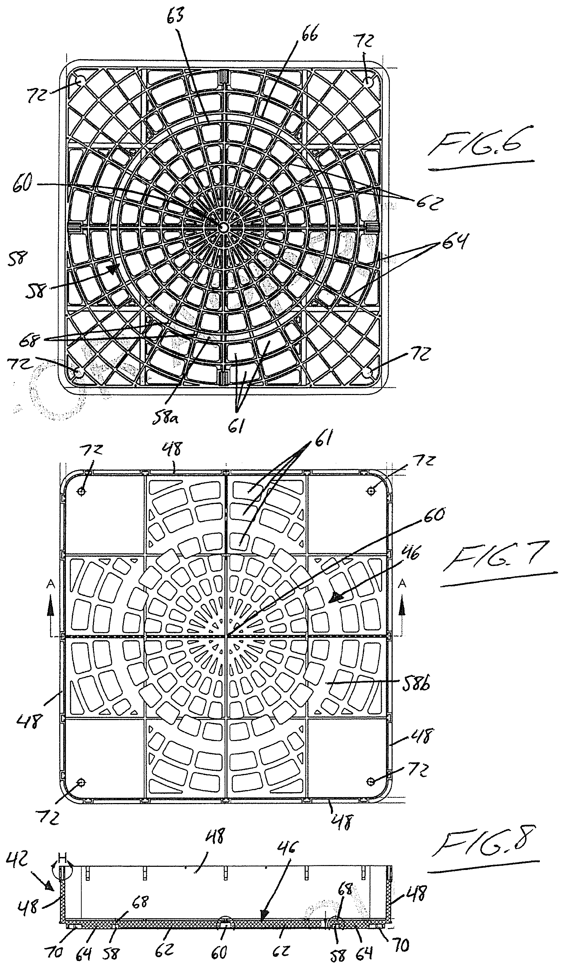

A primary catch feature in the underside of the storage unit is a circular open-bottom channel 58 that follows a 360-degree circular path around a center point 60 of the floor panel at an intermediate radial distance between this center point 60 and the outer perimeter of the floor panel 46. This circular catch channel 58 is seen from the open bottom side 58a thereof in the bottom plan view of Figure 6, and from the closed top side 58b thereof in the top plan view of Figure 7. In Figure 7, the channel is identifiable from the top due to a perforated skeletal or web-like structure of the floor panel in the illustrated embodiment, where the floor panel features apertures or openings 61 laid out in a series of circular arrays that are centered around the floor panel's center point. The closed top side 58b of the channel 58 is thus visible in Figure 7 as a continuous ring centered on the center point 60 of the floor panel and residing at an intermediate radial distance between the center point 60 and the floor area's outer perimeter. In other embodiments where the topside of the floor is of a non-perforated, or less-perforated, structure, the open-bottom channel 58 in the underside of the floor panel is not identifiable at the topside thereof.

With reference to the bottom views in Figures 5 and 6, in the web-like floor panel of the illustrated embodiment, inner radial ribs 62 of the floor panel 46 radiate outward from the center point 60 thereof to an inside wall 63 of the channel 58. Outer radial ribs 64, some of which are aligned with the inner radial ribs, continue from an outside wall 66 of the channel 58 to the outer perimeter of the floor. At this outer perimeter of the floor panel, the outer radial ribs connect with the base module side walls 48 at the bottom ends thereof. As shown, radial braces 68 of lesser height than the radial ribs interconnect the inside and outside walls 63, 66 of the channel 58 at angularly spaced positions therearound, at angular intervals matching those at which the inner radial ribs are spaced from one another around the center point of the floor panel. The bottom ends of these braces 68 terminate at a greater elevation than the bottom ends of the radial ribs 62, 64 so that a lower half of the channel is entirely open and uninterrupted in its circular path around the center of the floor panel. The bottom ends of the radial ribs 62, 64 all reside coplanar with one another, thus defining a lowermost plane of the storage unit from which the catch channel 58 is recessed upwardly to create a continuous circular slot in which a catch member of the vehicle's extendable arm is received to enable loading and unloading of the storage bin to and from the vehicle, as described in more detail below.

Just inside the outer perimeter of the floor panel 46 at each of the four sides thereof, the underside of the storage unit features a respective secondary catch recess 70 that is likewise recessed upwardly from the lowermost plane of the storage unit for selective engagement of this catch recess 70 by the catch member of the extension arm shuttle of the storage/retrieval vehicle. However, each catch recess is a relatively small rectangular slot or cavity, unlike the much larger catch channel spanning a substantial circumferential distance around the center of the floor panel. Each catch recess 70 is located mid-way along the respective perimeter side of the storage unit floor panel 48, thus interrupting a respective one of the outer radial ribs 64 at or near an outer end thereof where this rib perpendicularly intersects the respective side wall 48 of the storage unit at a midpoint thereof. The four secondary catch recesses 70 are thus disposed at ninety-degree intervals from one another around the center point of the storage unit floor just inside the outer perimeter of the storage unit.

In addition to the catch channel 58 and catch recesses 70, the underside of the storage unit features four bosses 72 disposed just inside the outer perimeter of the floor area at the four corners thereof. Each boss 72 forms a cylindrical enlargement on a respective diagonal outer rib that intersects the square outer perimeter of the floor panel at a respective corner thereof. The bottom ends of these bosses 72 are coterminous with the bottom ends of the radial ribs to form enlarged solid surface areas at the lowermost plane of the storage unit for alignment with and detection by the optical sensors 40 at the corners of the vehicle platform 32 when the storage unit is properly loaded in an aligned position thereon. In embodiments where the floor panel 46 is of solid or less perforated structure, the underside of the floor panel, except for the circular primary catch channel 58 and four secondary catch recesses 70, is a continuous solid surface spanning uninterruptedly from the catch channel 58 to outer corners of the floor panel, thereby omitting the need for the bosses 72 of the skeletal or web-like floor structure of the illustrated embodiment.

The extendable/retractable arm 38 of the storage/retrieval vehicle has a movable shuttle 74 thereon. The shuttle 74 features a horizontal base plate 76 and a raised ridge-like catch member 78 standing vertically upward therefrom in a cross-wise orientation lying perpendicular to the longitudinal direction of the extendable/retractable arm 38 (i.e. the direction in which the arm is elongated and linearly extendable and retractable from the rotatable turret 34). The arm 38 and shuttle forms parts of a loading/unloading mechanism by which the storage/retrieval vehicle cooperates with the primary circular catch channel 58 of the storage unit 16 to load and unload the storage unit to and from the vehicle 19, and also by which the secondary catch recesses 70 are usable as a backup should the loading mechanism fail to engage the primary circular catch channel 58. The shuttle 74 is movable back and forth relative to the arm 38 at a topside thereof in the longitudinal direction, via a closed-loop belt 75 or chain entrained about a motorized pulley or sprocket set carried on the same arm 38. An upper run of said belt 75 or chain runs longitudinally of the arm 38 at the topside thereof carries the shuttle 74 thereon, whereby driven revolution of the belt or chain in opposing direction drives the linear movement of the shuttle 74 back and forth in the longitudinal direction of the arm 38 at the topside thereof.

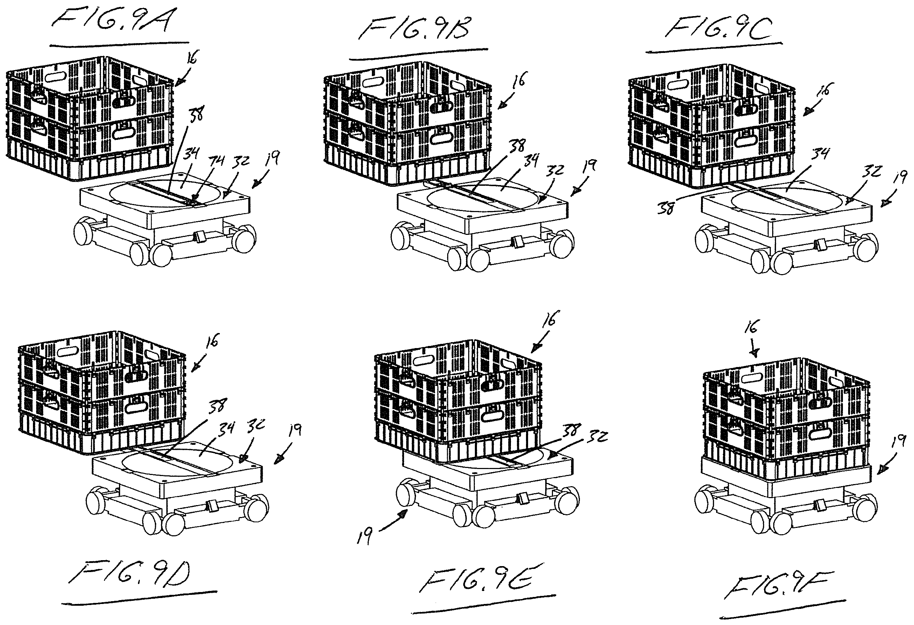

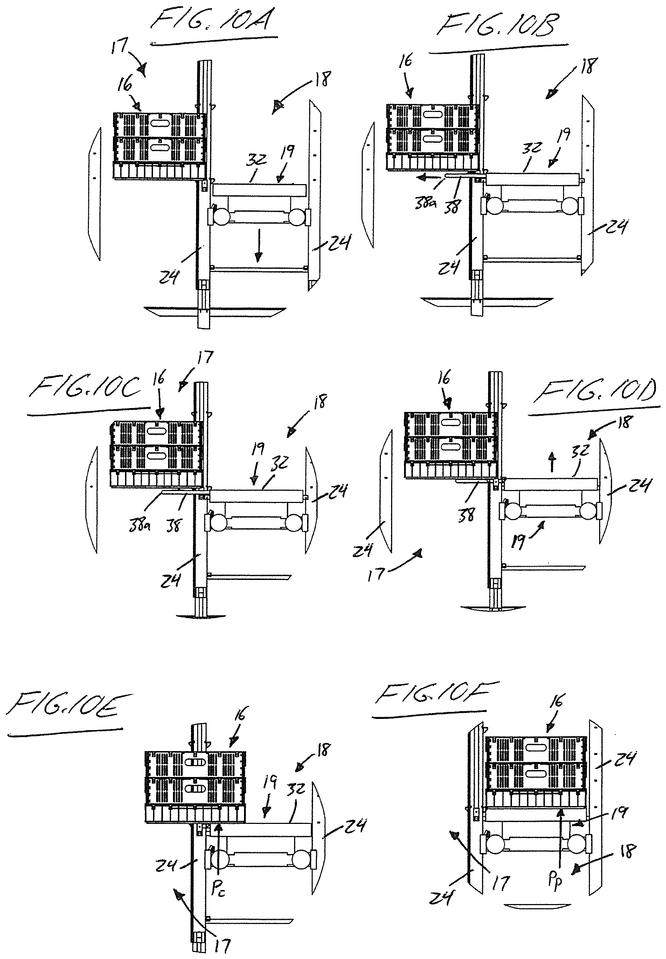

Having described the structure of the vehicle's loading/unloading mechanism and the corresponding catch features on the storage unit, attention is now turned to cooperation therebetween to effect loading and unloading of the storage unit to and from the vehicle. Figures 9 and 10 illustrating the successful performance of a normal loading routine pulling the storage unit onto the platform of the robotic storage/retrieval vehicle, from a storage location inside the three-dimensional grid structure of Figure 1. Figure 9 shows the process in perspective view with the vehicle and storage unit isolated from the three-dimensional grid structure, while Figure 10 shows a side view with select elements of the grid structure present for contextual purposes.

With reference to Figure 10A, the robotic storage/retrieval vehicle 19 first travels vertically through a shaft 18 of the grid structure, downwardly from the upper gridded track layout, via engagement of the pinion wheels of the robotic storage/retrieval vehicle with rack teeth on the frame members 24 at the corners of the shaft 18, until the robotic storage/retrieval vehicle reaches an initial pre-loading position in which the topside of the vehicle platform 32 resides at an elevation shortly below the lowermost plane of the targeted storage unit 16. If not already situated in the particular working position pointing the arm-deployment point 34a toward the front side of the vehicle that faces the storage column 17 in which the targeted storage unit 16 is currently shelved at a given storage location, then the turret 34 is rotated into this particular forward-facing position working position.

It will be appreciated that the terms front/forward/rear/rearward are used relative to the storage location to or from which a storage unit is being deposited or extracted, and not in absolute terms to refer to specific sides of the vehicle. When interacting with a storage location on a north side of a given shaft 18 of the grid structure in which the vehicle 19 currently resides, the "front side" of the vehicle refers to the north-facing side thereof. On the other hand, when interacting with a storage location on a south side of a shaft, whether the same shaft or otherwise, the "front side" of the vehicle refers to the south-facing side thereof. The vehicle's orientation in three-dimensional space never changes in its travel through the three-dimensional grid structure, so the north-facing side always faces north, the south-facing side always faces south, etc.

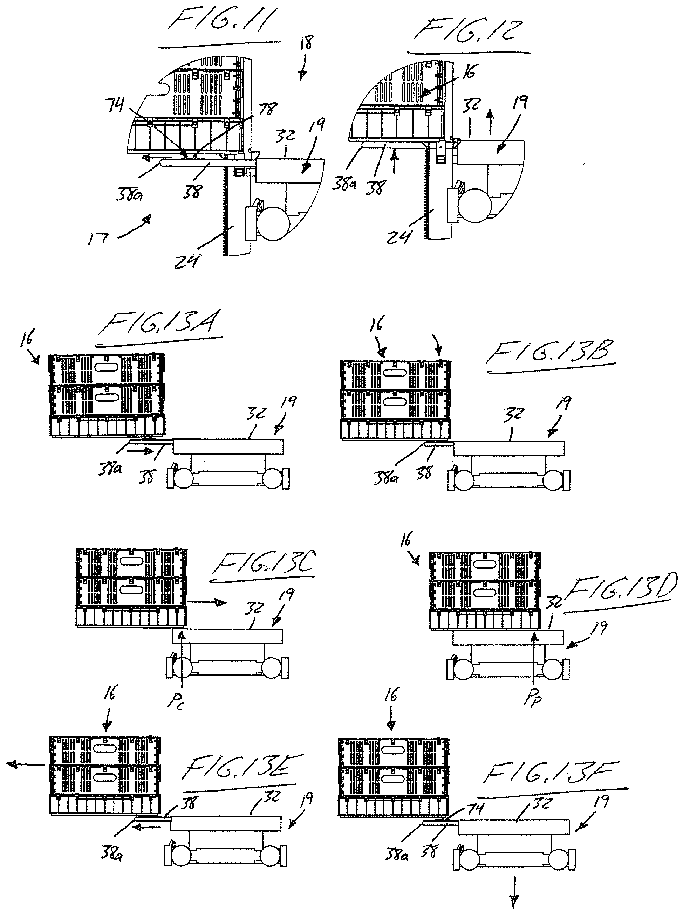

Turning to Figure 10B, the vehicle extends its arm 38 forwardly out from the turret at this front side of the vehicle, thus reaching the arm 38 forwardly through the open side of the shaft 18 into the storage column 17 at an elevation closely beneath the currently shelved storage unit 16. During this deployment of the arm 38, the shuttle 74 is displaced longitudinally forward on the deployed arm toward a distal end 38a thereof furthest from the turret, as shown in Figure 11. Such extension of the arm and forward displacement of the shuttle is performed until the shuttle reaches a predetermined point on the arm 38 that is known to directly underlie the primary circular catch channel 58 in the underside of the storage unit 16, provided that the storage unit is seated in a properly shelved position in its current storage location, e.g. abutted against an appropriate stop at the far end of the shelf opposite the shaft 18 Figures 10C and 11 represent this stage in the loading routine, where the deployed state of the arm 38 and shuttle 74 have placed the catch member 78 in alignment under the primary circular catch channel 58 in the underside of the storage unit 16. The robotic storage/retrieval vehicle 19 is driven slightly upwardly by its pinion wheel engagement with the rack-toothed frame members 24 at the corners of the shaft 18 to raise the catch member 78 of the shuttle 74 up into engagement with the primary circular catch channel 58, as represented in Figures 10D and 12.

At this point, the deployed arm 38 is retracted, whereby the storage unit 16 is pulled toward the vehicle 19 by the catch member 78 until the shuttle 74 reaches a check position Pc situated inwardly of the perimeter of the vehicle platform 32, thus having pulled the nearest side of the storage unit 16 onto the platform 32 of the vehicle 19, as shown in Figure 10E. At this point, the onboard processor of the robotic storage retrieval vehicle queries the status of the load sensors 40 to check that the two load sensors adjacent the front side of the vehicle both indicate a positive "load detected" status confirming the presence of the storage unit 16 overtop of these two front load sensors. If the result of this query is positive, then the processor has confirmed successful pulling of the storage unit partially onto the vehicle platform 32.

In response, the processor triggers further displacement of the shuttle 72 in the rearward direction away from the distal end 38a of the arm 38, along with further retraction of the arm 38 if not already fully retracted into the rotatable turret 34. With reference to Figure 10F, the shuttle is driven rearwardly on the fully retracted arm 38 until it passes the center point of the vehicle platform 32 and reaches a predetermined park position Pp that's rearwardly spaced from the platform center point by a distance equal to the radial distance from the center point of the storage unit floor panel to the primary circular catch channel 58 therein. Accordingly, this park position Pp of the shuttle corresponds to a fully loaded position of the storage unit 16 on the vehicle platform 32, as shown in Figure 10F. Upon the arrival of the shuttle at the park position Pp, the vehicle processor queries the four load sensors 40 again to check for a positive "load detected" status from all four load sensors, thereby confirming that the storage bin reached the fully loaded d position and is properly aligned atop the vehicle platform 32.

The forgoing example illustrated in Figures 9 and 10 reflects the successful completion of a normal loading process, where the catch member 78 of the vehicle's loading/unloading mechanism properly engages the primary circular catch channel 58 of the storage unit, in which case no reliance is made on the secondary catch recesses 70 of the storage unit. On the other hand, Figure 13 demonstrates how reliance is made on the secondary catch recesses 70 to enable a successful second loading attempt should engagement of the primary circular catch channel fail during a first loading attempt.

Figure 13A illustrates the same arm and shuttle retraction step as Figure 10D, but in an instance where the catch member 78 of the movable shuttle 74 failed to engage in the primary circular catch channel 58 in the preceding step of Figure 10C. As a result, in Figure 13A, the initial retraction of the arm 38 and shuttle 74 from their forwardly deployed positions doesn't pull the storage unit 16 outwardly from its shelved position in the storage location of the grid structure. Instead, the catch member 78 on the retracing arm and shuttle rides along the underside of the storage unit 16 toward the secondary catch recess 70 adjacent the side of the storage unit 16 that is nearest the vehicle 19 and faces into the shaft 18. As shown in Figure 13B, once the moving shuttle 74 arrives at this nearest vehicle-facing side of the storage unit, the secondary catch recess 70 at this nearest side of the storage unit falls onto the catch member 78 of the shuttle 74, thus achieving engagement of between the loading mechanism of the vehicle and the storage unit 16 despite the initial failed engagement at the primary circular catch channel 58.

As shown in Figure 13C, rearward retraction of the arm 38 and shuttle 74 is continued until the shuttle 74 reaches the check point Pc, thus having pulled the nearest side of the storage unit 16 onto the vehicle platform 19 into a position where a leading portion of storage unit overlies the two load status sensors adjacent the front side of the vehicle. Further retraction of the shuttle 74 is continued in the same manner as described above for the normal successful loading process, thus bringing the shuttle into the park position Pp near the opposing rear side of the vehicle. However, because the pulling of the storage bin 16 was performed at the secondary catch recess 70 near the outer perimeter of the storage unit floor, the storage bin stops short of the second pair of load sensors at the rear side of the platform. Accordingly, the query of the load sensors upon arrival of the shuttle at the park position Pp results in a positive "load detected" status at only the two front sensors and a negative "no load" status at the two rear sensors. This detection by the processor of a negative "no load" status at the rear sensors indicates that there has been a failure to fully load the storage unit 16 onto the vehicle platform 32, as shown in Figure 13D, but the positive "load detected" status by a partial subset of the load sensors (i.e., the two front sensors) confirms that a partially loaded status was obtained, from which it is concluded that the secondary catch recess 70 was successfully engaged.

In response to this detection that the storage unit wasn't fully loaded but that the secondary catch recess 70 was engaged, the process initiates a corrective operation intended to offload the partially loaded storage unit from the vehicle back into the storage location and to re-position the storage unit in a properly shelved condition therein before re-attempting another loading process. To start, the processor initiates the forward displacement of the shuttle 74 and forward extension of the arm 38 into the storage column 17, as shown in Figure 13E, thus pushing the partially loaded storage unit 16 back into the storage location via the catch member's engaged position inside the secondary catch recess 70 of the storage unit. The forward travel of the shuttle from the check position Pc during this forward re-deployment of the arm and shuttle is selected to equal the known distance from which the current engaged secondary catch recess 70 should reside from the stop at the far end of the shelf when the storage unit is fully and properly shelved. Accordingly, the forward re-deployment of the arm and shuttle pushes the storage unit into a fully shelved position in the storage location.

At this point, as shown in Figure 13F, the robotic storage/retrieval vehicle 19 in the shaft 18 then lowers itself slightly downward via the operation of its pinion wheels in order to drop the catch member 78 of the shuttle 74 out of engagement with the secondary catch recess 70 of the storage unit 16, thus placing the shuttle 74 and arm 38 beneath the storage unit 16 in an unengaged position spaced slightly there below. At this point, the normal loading procedure steps illustrated in Figures 10B through 10F are repeated to reattempt full and proper extraction and loading of the storage unit from the storage location using the primary circular catch channel 58.

The secondary catch recesses 70 and described cooperation with the loading mechanism, thus provides a redundant catch arrangement by which a first failed extraction and loading of the storage unit from the location onto the vehicle, due to vibrational shifting or other misalignment of the storage unit 16 from a properly shelved position in the storage location, is corrected by partially extracting the storage unit 16 from the storage location, and then fully re-inserting the partially extracted storage unit back into the storage location to attain proper alignment on the shelving, and thus enabling successful extraction and loading in a repeated attempt to engage the primary circular catch channel. The processor is configured to perform multiple re-positioning operations and loading re-attempts before concluding that further attempts aren't likely to succeed, and instead triggering the transmission of a wireless alarm signal to a central computerized control system responsible for controlling and monitoring the vehicle fleet so that human intervention is initiated to diagnose and resolve the source of the loading complication.

The inclusion of a redundant catch feature like the perimeter-adjacent catch recesses 70 of the illustrated embodiment is exploited regardless of whether the primary catch feature is a circular catch channel 58 like that of the illustrated embodiment. On the other hand, the use of a circular catch channel has notable benefits, as demonstrated by Figure 14, in which the platform of a storage retrieval vehicle is schematically illustrated in top plan view, and the primary circular catch channel 58 of a storage unit seated on the vehicle platform in a fully loaded and aligned position is shown in broken lines.

The top side of the turret 34 resides in slightly recessed elevation relative to the surrounding deck surface 36 of the vehicle platform 32, whereby the underside of the storage unit 16 carried on the vehicle platform 32 sits in direct contact only with the slightly higher deck surface 36, and not with the topside of the rotating turret 38. Of the extendable/retractable arm 38 and the movable shuttle 74 carried thereon, only the catch member 78 of the shuttle 74 reaches and exceeds the elevation of the deck surface 36. The center point of the storage unit's floor panel 46, around which the primary circular catch channel 58 is centered, is coincident with the center point of the vehicle platform 32, and both of these center points are coincident with the vertical rotation axis AR of the turret 38. The circular catch channel 58 thus allows rotation of the turret 34 to be performed while the storage unit remains statically seated in a stationary position on the deck surface 36, as the catch member 78, normally maintained in the parked position Pp on the retracted arm 38 of the turret 34, simply travels through the circular catch channel 58 on a revolutionary path around the rotational axis AR during the rotation of the turret. Figure 14 illustrates the rotation of the turret through a full 360-degrees, thereby demonstrating attainment of any of the four different working positions of the turret, without the seated storage unit 16 ever having to be removed from, or re-oriented on, the vehicle platform 32.

This enables unloading of a vehicle-carried storage unit into any available storage space on any side of any shaft of the three-dimensional storage grid regardless of what orientation the storage unit was originally placed on the vehicle. Accordingly, a vehicle having retrieved a storage unit from a north side of one shaft subsequently re-stocks that storage unit at any storage location on any side of any shaft, whether on the north, south, east or west side thereof, without the storage unit ever having to be removed from, or re-oriented on, the vehicle. In the illustrated embodiment, the circular channel spans a full 360-degrees, thus enabling the turret to rotate into any of its four different working positions in either direction about the turret's rotational axis. While this full 360-degree span is preferable, it will be appreciated that a 270-degree span would be sufficient to accommodate the catch member of the shuttle in any of the turret's four working positions, though this would require knowledge of the orientation in which the storage unit resides on the vehicle in order to limit movement of the catch member to the angular region spanned around the turret's rotational axis by catch channel of the currently-carried storage unit. In the preferred 360-degree embodiment, the orientation in which a storage unit is placed or loaded onto the vehicle is of no consequence.

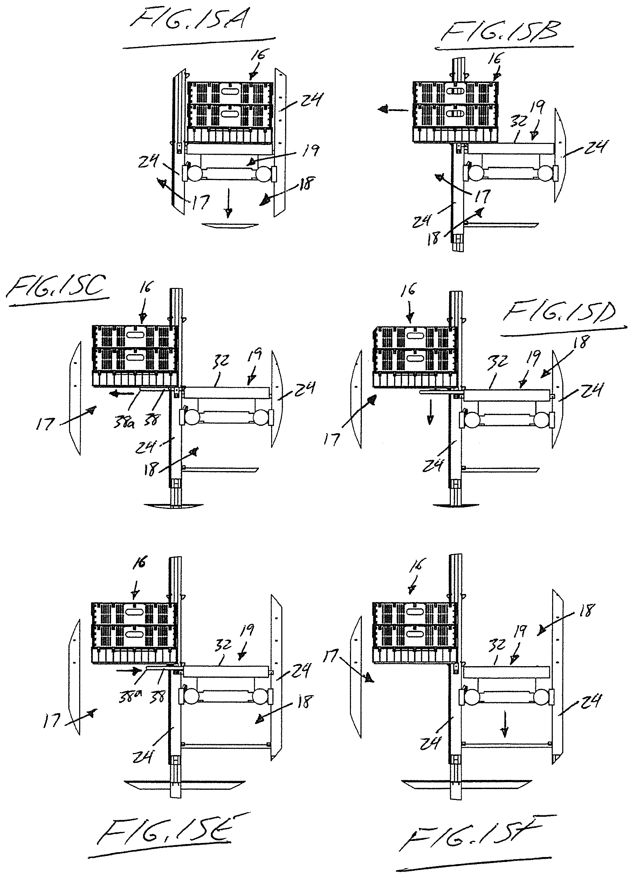

Turning to Figure 15, the process of unloading a storage unit 16 from the vehicle 19 into a storage location in the grid structure is basically a reversal of the normal loading procedure described with reference to Figure 10. Referring to Figure 15A, the vehicle 19 first travels vertically through a shaft 18 of the grid structure, i.e., downwardly through the shaft from the gridded upper track layout, via engagement of the pinion wheels of the vehicle with rack teeth on the frame members 24 at the corners of the shaft 18, until the robot reaches an initial pre-unloading position in which the topside of the vehicle platform 32 resides at an elevation slightly above the shelving brackets of the storage location for which the storage unit is destined. If not already in the forward-facing working position, then the turret 34 is rotated beneath the stationary storage unit into this forward-facing working position.

With reference to Figures 15B and 15C, the arm 38 is extended forwardly from the turret 34 into the storage column 17, and the movable shuttle is displaced forwardly along the arm. Since the catch member 78 shuttle 74 remains engaged in the primary circular catch channel 58 of the storage unit from the time the storage unit was first loaded or placed on the vehicle, this forward movement of the shuttle 74 from its parked position Pp toward and into the targeted storage location in the storage column 17 pushes the storage unit 16 forwardly onto the shelving of said storage location. As shown in Figure 15D, once the storage unit 16 is fully unloaded off the vehicle 19 and onto the shelving, the vehicle 19 lowers itself slightly downward in the shaft 18 via the operation of its pinion wheels, thus withdrawing the catch member 78 of the shuttle 74 from the primary circular catch channel 58 of the storage unit. This enables rearward retraction of the extended arm 38 and deployed shuttle 74, as shown in Figure 15E. With the arm 38 retracted fully into the turret 34, the robotic storage/retrieval vehicle 19 then travels vertically through the shaft 18 via the driven operation of its pinion wheels in order to depart the storage location at which the storage unit was just shelved and head toward another destination in the grid structure.

While the foregoing describes the loading and unloading of storage units to and from the robotic storage/retrieval vehicles, particularly at storage locations in storage columns surrounding open vertical shafts in a three-dimensional storage grid, the described capabilities of being able to load and unload at all four sides using a singular loading/unloading mechanism that re-positions itself into an appropriate one of four different working positions, all without moving a storage unit currently carried on the vehicle, are employed regardless of the particular operating environment of that robotic storage/retrieval vehicle. Accordingly, such capabilities are employed in any variety of three-dimensional storage systems in which the robotic storage/retrieval vehicles need to access locations on multiple sides of available travel paths through said system, whether or not said travel paths are specifically vertical shafts of a three-dimensional grid structure.

Also, while the invention uses a circular catch channel in the storage bin to accommodate the rotational motion of the turret of the loading/unloading mechanism while the storage unit sits stationary in a static orientation atop the vehicle platform, other embodiments, which are not part of the present invention, may employ other approaches to accommodate such relative movement of the loading/unloading mechanism into its four different working states operable to load/unload at the different sides of the vehicle platform. In one alternative embodiment, the catch member is movable between a raised engagement position for engagement with a catch feature in the underside of the storage unit and a lowered disengagement position for disengagement from said catch feature, whereby once the storage unit is fully loaded onto the vehicle platform, the catch member is lowered into the disengagement position, thus allowing rotation of the turret, arm, and shuttle relative to the storage unit seated on the deck surface.

In another alternate embodiment, which is not part of the present invention, instead of a ring-like circular catch channel curving angularly about the center of the storage unit at a radial distance outward therefrom, the primary catch feature is a central recess centered in the underside of the storage unit floor, provided the deployed positions of the arm and shuttle are sufficient to reach this central point on the storage unit. The illustrated embodiment has at least one advantage over such embodiments, in that since the ring-like circular catch channel is located nearer to the respective perimeter side of the storage unit from which the vehicle is interacting therewith, the extension/retraction distance of the vehicle arm is reduced, as seen in the drawings where the outward reaching distance of the arm from the vehicle in the deployed arm position is less than half of the storage unit width. The illustrated embodiment in which the arm of the vehicle's loading/unloading mechanism features a moving shuttle thereon is also beneficial in maximizing the compatible storage unit size relative to the vehicle platform while minimizing the necessary extension/retraction distance of the vehicle arm, though other embodiments could employ a longitudinally fixed catch member of static longitudinal position on the extendable/retractable arm without detriment to other novel and inventive features of the illustrated embodiment.

## Claims

1. In combination, a storage unit (16) storable within a three-dimensional storage system (10) and a storage/retrieval vehicle (19) navigable through said three-dimensional storage system (10) to storage locations therein at which said storage unit (16) is selectively storable and retrievable, wherein said storage/retrieval vehicle (19) comprises:
a frame (26) conveyable through said three-dimensional storage system (10);
a platform (32) positioned atop said frame (26) for receipt of said storage unit (16) thereon, and
a loading/unloading mechanism operable to load and unload said storage unit (16) to and from said platform (32) at four different sides thereof, wherein said storage unit (16) and said storage/retrieval vehicle (19) are configured to enable unloading of the storage unit (16) from said platform (32) in any one of four different directions at the four different respective sides of said storage/retrieval vehicle (19),
wherein:
said loading/unloading mechanism of the vehicle comprises a rotatable turret (34) installed in said platform (32) to reside beneath the storage unit (16) when loaded onto said platform (32), and an extendable/retractable arm (38) selectively extendable from said rotatable turret (34) into a deployed position reaching outwardly beyond a perimeter (37) of said platform (32), said turret (34) being rotatable into a plurality of different working positions in which the arm isextendable outwardly from the turret in said different directions at said different respective sides of the vehicle, and said extendable/retractable arm (38) comprises a catch member carried thereon for engagement with an underside of the storage unit (16); and **characterized in that**
said storage unit (16) comprises a catch channel residing in an underside of the storage unit (16) and in which the catch member of the loading/unloading mechanism is selectively engageable, wherein said catch channel lies on a circular path along which the catch member can traverse the catch channel during rotation of the turret while the storage unit (16) is seated on said platform (32), wherein said storage unit (16) and said storage/retrieval vehicle (19) are configured to enable unloading of the storage unit (16) from said platform (32) in any one of four different directions at the four different respective sides of said storage/ retrieval vehicle regardless of an original orientation in which said storage unit (16) was previously loaded onto the platform (32) and without reorienting said storage unit (16) from said original orientation.

2. The combination of claim 1 wherein the loading/unloading mechanism is switchable between four different working states each operable to load and unload said storage unit (16) at a respective one of the four different sides of the platform (32), and the storage unit (16) and said storage/retrieval vehicle (19) are configured to enable static support of the storage unit (16) on said platform (32) in a static orientation thereon while said loading/unloading mechanism transitions between the different working states.

3. The combination of any preceding claim wherein the loading/unloading mechanism comprises an extendable/retractable device selectively deployable at each of said four different sides of the platform (32) to define a respective one of the four different working states.

4. The combination of claim 1 wherein said catch channel spans at least 270-degrees of said circular path.

5. The combination of claim 4 wherein said catch channel spans a full 360-degrees of said circular path.

6. The combination of any one of claims 1 to 5 wherein said extendable/retractable arm (38) comprises a movable shuttle (74) that is displaceable back and forth along said extendable arm (38) and on which the catch member resides.

7. The combination of any one of claims 1 to 6 wherein said platform (32) comprises outer deck surfaces disposed around the turret (34), and the turret (34) resides in recessed elevation relative to said outer deck surfaces.

8. The combination of any one of claims 1 to 7 wherein the storage unit (16) comprises at least one redundant catch feature recessed in the underside thereof at a distance situated outwardly from the circular path of the catch channel.

9. The combination of claim 8 wherein said at least one redundant catch feature comprises a plurality of redundant catch recesses each residing between the catch channel and a respective side of the storage unit (16).

10. The combination of any one of claims 1 to 3 wherein the loading/unloading mechanism comprises an extendable arm (38) that is selectively extendable into a deployed position reaching outwardly beyond a perimeter (37) of the platform (32), and that comprises a movable shuttle (74) that is engageable with the storage unit (16) and displaceable back and forth along said extendable arm (38).

11. The combination of claim any one of claims 1 to 3 and 10 wherein
the storage unit (16) comprises a primary catch feature engageable by the loading/unloading mechanism in a deployed state thereof during a loading operation intended to pull said storage unit (16) onto the platform (32) of the vehicle, and at least one secondary catch feature positioned relative to the primary catch feature to be engaged by the loading/unloading mechanism in more retracted state thereof later in the loading operation should the loading/unloading mechanism fail to engage the primary catch feature.

12. The combination of claim 11 comprising a plurality of secondary catch features, each residing adjacent a respective outer perimeter (37) side of the storage unit (16).

13. The combination of claim 11 or 12 wherein the primary and secondary catch features are located at an underside of the storage unit (16).

14. The combination of any one of claims 11 to 13 wherein each secondary catch feature is recessed into the storage unit (16).

## Patentansprüche

1. In Kombination, eine Lagereinheit (16), die in einem dreidimensionalen Lagersystem (10) lagerbar ist, und ein Lager-/Entnahmefahrzeug (19), das durch das dreidimensionale Lagersystem (10) zu Lagerplätzen darin navigierbar ist, an denen die Lagereinheit (16) selektiv lagerbar und entnehmbar ist, wobei das Lager-/Entnahmefahrzeug (19) umfasst:
einen Rahmen (26), der durch das dreidimensionale Lagersystem (10) förderbar ist;
eine Plattform (32), die auf dem Rahmen (26) positioniert ist, um die Lagereinheit (16) darauf aufzunehmen, und
einen Be-/Entlademechanismus, der betreibbar ist, um die Lagereinheit (16) an vier verschiedenen Seiten davon auf die Plattform (32) zu laden und von dieser zu entladen, wobei die Lagereinheit (16) und das Lager-/Entnahmefahrzeug (19) konfiguriert sind, um ein Entladen der Lagereinheit (16) von der Plattform (32) in einer beliebigen von vier verschiedenen Richtungen an den vier verschiedenen jeweiligen Seiten des Lager-/Entnahmefahrzeugs (19) zu ermöglichen,
wobei:
der Be-/Entlademechanismus des Fahrzeugs einen drehbaren Turm (34) umfasst, der in der Plattform (32) installiert ist, um unter der Lagereinheit (16) zu liegen, wenn diese auf die Plattform (32) geladen ist, und einen ausfahrbaren/einfahrbaren Arm (38), der selektiv von dem drehbaren Turm (34) in eine ausgefahrene Position ausfahrbar ist, die nach außen über einen Umfang (37) der Plattform (32) hinausreicht, wobei der Turm (34) in eine Vielzahl verschiedener Arbeitsstellungen drehbar ist, in denen der Arm von dem Turm nach außen in den verschiedenen Richtungen an den verschiedenen jeweiligen Seiten des Fahrzeugs ausfahrbar ist, und der ausfahrbare/einfahrbare Arm (38) ein Greifglied umfasst, das darauf getragen wird, um mit einer Unterseite der Lagereinheit (16) in Eingriff zu kommen; und **dadurch gekennzeichnet, dass**
die Lagereinheit (16) einen Greifkanal umfasst, der in einer Unterseite der Lagereinheit (16) liegt und in dem das Greifglied des Be-/Entlademechanismus selektiv in Eingriff bringbar ist, wobei der Greifkanal auf einem kreisförmigen Pfad liegt, entlang dem das Greifglied den Greifkanal während der Drehung des Turms durchlaufen kann, während die Lagereinheit (16) auf der Plattform (32) sitzt, wobei die Lagereinheit (16) und das Lager-/Entnahmefahrzeug (19) konfiguriert sind, um ein Entladen der Lagereinheit (16) von der Plattform (32) in einer beliebigen von vier verschiedenen Richtungen an den vier verschiedenen jeweiligen Seiten des Lager-/Entnahmefahrzeugs unabhängig von einer ursprünglichen Ausrichtung zu ermöglichen, in der die Lagereinheit (16) zuvor auf die Plattform (32) geladen wurde, und ohne die Lagereinheit (16) von der ursprünglichen Ausrichtung neu auszurichten.

2. Kombination nach Anspruch 1, wobei der Be-/Entlademechanismus zwischen vier verschiedenen Arbeitszuständen schaltbar ist, die jeweils betreibbar sind, um die Lagereinheit (16) an einer jeweiligen der vier verschiedenen Seiten der Plattform (32) zu laden und zu entladen, und die Lagereinheit (16) und das Lager-/Entnahmefahrzeug (19) konfiguriert sind, um eine statische Abstützung der Lagereinheit (16) auf der Plattform (32) in einer statischen Ausrichtung darauf zu ermöglichen, während der Be-/Entlademechanismus zwischen den verschiedenen Arbeitszuständen übergeht.

3. Kombination nach einem der vorhergehenden Ansprüche, wobei der Be-/Entlademechanismus eine ausfahrbare/einfahrbare Vorrichtung umfasst, die selektiv an jeder der vier verschiedenen Seiten der Plattform (32) einsetzbar ist, um einen jeweiligen der vier verschiedenen Arbeitszustände zu definieren.

4. Kombination nach Anspruch 1, wobei der Greifkanal mindestens 270 Grad des kreisförmigen Pfads überspannt.

5. Kombination nach Anspruch 4, wobei der Greifkanal volle 360 Grad des kreisförmigen Pfads überspannt.

6. Kombination nach einem der Ansprüche 1 bis 5, wobei der ausfahrbare/einfahrbare Arm (38) einen beweglichen Schlitten (74) umfasst, der entlang des ausfahrbaren Arms (38) hin und her verschiebbar ist und auf dem das Greifglied liegt.

7. Kombination nach einem der Ansprüche 1 bis 6, wobei die Plattform (32) äußere Deckflächen umfasst, die um den Turm (34) angeordnet sind, und der Turm (34) in vertiefter Höhenlage relativ zu den äußeren Deckflächen liegt.

8. Kombination nach einem der Ansprüche 1 bis 7, wobei die Lagereinheit (16) mindestens ein redundantes Greifelement umfasst, das in die Unterseite davon in einem Abstand vertieft ist, der nach außen von dem kreisförmigen Pfad des Greifkanals gelegen ist.

9. Kombination nach Anspruch 8, wobei das mindestens eine redundante Greifelement eine Vielzahl redundanter Greifvertiefungen umfasst, die jeweils zwischen dem Greifkanal und einer jeweiligen Seite der Lagereinheit (16) liegen.

10. Kombination nach einem der Ansprüche 1 bis 3, wobei der Be-/Entlademechanismus einen ausfahrbaren Arm (38) umfasst, der selektiv in eine ausgefahrene Position ausfahrbar ist, die nach außen über einen Umfang (37) der Plattform (32) hinausreicht, und der einen beweglichen Schlitten (74) umfasst, der mit der Lagereinheit (16) in Eingriff bringbar ist und entlang des ausfahrbaren Arms (38) hin und her verschiebbar ist.

11. Kombination nach einem der Ansprüche 1 bis 3 und 10, wobei
die Lagereinheit (16) ein primäres Greifelement umfasst, das durch den Be-/Entlademechanismus in einem ausgefahrenen Zustand davon während eines Beladevorgangs in Eingriff bringbar ist, der dazu bestimmt ist, die Lagereinheit (16) auf die Plattform (32) des Fahrzeugs zu ziehen, und mindestens ein sekundäres Greifelement, das relativ zu dem primären Greifelement positioniert ist, um durch den Be-/Entlademechanismus in einem stärker eingefahrenen Zustand davon später in dem Beladevorgang in Eingriff gebracht zu werden, falls der Be-/Entlademechanismus das primäre Greifelement nicht in Eingriff bringt.

12. Kombination nach Anspruch 11, umfassend eine Vielzahl sekundärer Greifelemente, die jeweils benachbart zu einer jeweiligen äußeren Umfangsseite der Lagereinheit (16) liegen.

13. Kombination nach Anspruch 11 oder 12, wobei die primären und sekundären Greifelemente an einer Unterseite der Lagereinheit (16) angeordnet sind.

14. Kombination nach einem der Ansprüche 11 bis 13, wobei jedes sekundäre Greifelement in die Lagereinheit (16) vertieft ist.

## Revendications

1. En combinaison, une unité de stockage (16) qui peut être stockée dans un système de stockage tridimensionnel (10) et un véhicule de stockage/récupération (19) qui peut naviguer à travers ledit système de stockage tridimensionnel (10) vers des emplacements de stockage dans celui-ci auxquels ladite unité de stockage (16) peut être sélectivement stockée et récupérée, dans lequel ledit véhicule de stockage/récupération (19) comprend :
un châssis (26) qui peut être transporté à travers ledit système de stockage tridimensionnel (10) ;
une plateforme (32) qui est positionnée au sommet dudit châssis (26) pour la réception de ladite unité de stockage (16) sur celle-ci, et
un mécanisme de chargement/déchargement qui est opérable pour charger et décharger ladite unité de stockage (16) vers et depuis ladite plateforme (32) sur quatre côtés différents de celle-ci, dans lequel ladite unité de stockage (16) et ledit véhicule de stockage/récupération (19) sont configurés pour permettre le déchargement de l'unité de stockage (16) depuis ladite plateforme (32) dans l'une quelconque de quatre directions différentes aux quatre côtés respectifs différents dudit véhicule de stockage/récupération (19),
dans lequel :
ledit mécanisme de chargement/déchargement du véhicule comprend une tourelle rotative (34) qui est installée dans ladite plateforme (32) pour résider sous l'unité de stockage (16) lorsqu'elle est chargée sur ladite plateforme (32), et un bras extensible/rétractable (38) qui est sélectivement extensible depuis ladite tourelle rotative (34) dans une position déployée qui s'étend vers l'extérieur au-delà d'un périmètre (37) de ladite plateforme (32), ladite tourelle (34) étant rotative dans une pluralité de positions de travail différentes dans lesquelles le bras est extensible vers l'extérieur depuis la tourelle dans lesdites directions différentes auxdits côtés respectifs différents du véhicule, et ledit bras extensible/rétractable (38) comprend un élément de prise qui est porté sur celui-ci pour l'engagement avec une face inférieure de l'unité de stockage (16) ; et **caractérisé en ce que**
ladite unité de stockage (16) comprend un canal de prise qui réside dans une face inférieure de l'unité de stockage (16) et dans lequel l'élément de prise du mécanisme de chargement/déchargement est sélectivement engageable, dans lequel ledit canal de prise se trouve sur un trajet circulaire le long duquel l'élément de prise peut traverser le canal de prise pendant la rotation de la tourelle tandis que l'unité de stockage (16) est assise sur ladite plateforme (32), dans lequel ladite unité de stockage (16) et ledit véhicule de stockage/récupération (19) sont configurés pour permettre le déchargement de l'unité de stockage (16) depuis ladite plateforme (32) dans l'une quelconque de quatre directions différentes aux quatre côtés respectifs différents dudit véhicule de stockage/récupération indépendamment d'une orientation d'origine dans laquelle ladite unité de stockage (16) a été précédemment chargée sur la plateforme (32) et sans réorienter ladite unité de stockage (16) depuis ladite orientation d'origine.

2. Combinaison de la revendication 1 dans laquelle le mécanisme de chargement/déchargement est commutable entre quatre états de fonctionnement différents chacun opérable pour charger et décharger ladite unité de stockage (16) à un respectif des quatre côtés différents de la plateforme (32), et l'unité de stockage (16) et ledit véhicule de stockage/récupération (19) sont configurés pour permettre le support statique de l'unité de stockage (16) sur ladite plateforme (32) dans une orientation statique sur celle-ci tandis que ledit mécanisme de chargement/déchargement transite entre les états de fonctionnement différents.

3. Combinaison de l'une quelconque des revendications précédentes dans laquelle le mécanisme de chargement/déchargement comprend un dispositif extensible/rétractable qui est sélectivement déployable à chacun desdits quatre côtés différents de la plateforme (32) pour définir un respectif des quatre états de fonctionnement différents.

4. Combinaison de la revendication 1 dans laquelle ledit canal de prise s'étend sur au moins 270 degrés dudit trajet circulaire.

5. Combinaison de la revendication 4 dans laquelle ledit canal de prise s'étend sur 360 degrés complets dudit trajet circulaire.

6. Combinaison de l'une quelconque des revendications 1 à 5 dans laquelle ledit bras extensible/rétractable (38) comprend une navette mobile (74) qui est déplaçable d'avant en arrière le long dudit bras extensible (38) et sur laquelle l'élément de prise réside.

7. Combinaison de l'une quelconque des revendications 1 à 6 dans laquelle ladite plateforme (32) comprend des surfaces de pont extérieures qui sont disposées autour de la tourelle (34), et la tourelle (34) réside dans une élévation en retrait par rapport auxdites surfaces de pont extérieures.

8. Combinaison de l'une quelconque des revendications 1 à 7 dans laquelle l'unité de stockage (16) comprend au moins un élément de prise redondant qui est en retrait dans la face inférieure de celle-ci à une distance qui est située vers l'extérieur depuis le trajet circulaire du canal de prise.

9. Combinaison de la revendication 8 dans laquelle ledit au moins un élément de prise redondant comprend une pluralité d'évidements de prise redondants qui résident chacun entre le canal de prise et un côté respectif de l'unité de stockage (16).

10. Combinaison de l'une quelconque des revendications 1 à 3 dans laquelle le mécanisme de chargement/déchargement comprend un bras extensible (38) qui est sélectivement extensible dans une position déployée qui s'étend vers l'extérieur au-delà d'un périmètre (37) de la plateforme (32), et qui comprend une navette mobile (74) qui est engageable avec l'unité de stockage (16) et déplaçable d'avant en arrière le long dudit bras extensible (38).

11. Combinaison de l'une quelconque des revendications 1 à 3 et 10 dans laquelle l'unité de stockage (16) comprend un élément de prise primaire qui est engageable par le mécanisme de chargement/déchargement dans un état déployé de celui-ci pendant une opération de chargement qui est destinée à tirer ladite unité de stockage (16) sur la plateforme (32) du véhicule, et au moins un élément de prise secondaire qui est positionné par rapport à l'élément de prise primaire pour être engagé par le mécanisme de chargement/déchargement dans un état plus rétracté de celui-ci plus tard dans l'opération de chargement si le mécanisme de chargement/déchargement échoue à engager l'élément de prise primaire.

12. Combinaison de la revendication 11 comprenant une pluralité d'éléments de prise secondaires, qui résident chacun adjacent à un côté de périmètre extérieur (37) respectif de l'unité de stockage (16).

13. Combinaison de la revendication 11 ou 12 dans laquelle les éléments de prise primaires et secondaires sont situés à une face inférieure de l'unité de stockage (16).

14. Combinaison de l'une quelconque des revendications 11 à 13 dans laquelle chaque élément de prise secondaire est en retrait dans l'unité de stockage (16).
